# EUROPÄISCHE PATENTSCHRIFT

(11) **EP 3 088 370 B1**
(45) Veröffentlichungstag und Bekanntmachung des Hinweises auf die Patenterteilung: **26.09.2018**
(21) Anmeldenummer: 15165370.6
(22) Anmeldetag: 28.04.2015
(51) Int. Cl.: C03B 23/053, C03B 23/07, C03B 23/045

(54) **VERFAHREN UND VORRICHTUNG ZUR HERSTELLUNG EINES ROHRES AUS GLAS**
METHOD AND DEVICE FOR PRODUCING A GLASS TUBE
PROCÉDÉ ET DISPOSITIF DE FABRICATION D'UN TUBE EN VERRE

(43) Veröffentlichungstag der Anmeldung: 02.11.2016
(73) Patentinhaber: Heraeus Quarzglas GmbH & Co. KG, 63450 Hanau (DE)
(72) Erfinder: Gromann, Boris, 63743 Aschaffenburg (DE); Söhn, Matthias, 64285 Darmstadt (DE); Blumenau, Alexander, 07743 Jena (DE)
(74) Vertreter: Staudt, Armin Walter

(56) Entgegenhaltungen:
- EP-A1- 0 037 648
- DE-C1- 4 121 611
- JP-A- H10 101 353
- US-A- 5 167 420

## Beschreibung

### Technisches Gebiet

Die vorliegende Erfindung betrifft ein Verfahren zur Herstellung eines Rohres aus Glas, insbesondere aus Quarzglas, umfassend folgende Verfahrensschritte:
(a) Bereitstellen eines Hohlzylinders aus dem Glas mit einer Wanddicke und mit einem Außendurchmesser D1,
(b) zonenweises Erhitzen und Erweichen des um eine Rotationsachse rotierenden Hohlzylinders in einer mit einer relativ zur Rotationsachse bewegten Heizzone,
(c) Bildung einer Verformungszone durch radiales Dehnen des erweichten Bereichs unter Wirkung einer Zentrifugalkraft und/oder eines in der Hohlzylinderbohrung anliegenden Innenüberdrucks, und
(d) kontinuierliches Formen des Rohres mit einem Außendurchmesser D2, der größer ist als D1.

Außerdem betrifft die Erfindung eine Vorrichtung zur Durchführung eines derartigen Verfahrens, umfassend
o eine Rotationseinrichtung zur Rotation eines Hohlzylinders aus Glas um seine Längsachse, der einen Innendurchmesser, einen Außendurchmesser D1 und eine von einer Wandung begrenzte Innenbohrung aufweist, und
o eine relativ zum Hohlzylinder bewegbare Heizeinrichtung zum zonenweisen Erhitzen und Erweichen des Hohlzylinders und Formen eines Rohres mit einem Außendurchmesser D₂, der größer ist als D₁.

Mittels derartiger Verfahren und Vorrichtungen werden Hohlzylinder aus Glas; insbesondere aus Quarzglas, in einem oder in mehreren Heiß-Umformschritten zu Rohren mit größerem Außendurchmesser umgeformt. Dabei wird ein um seine Längsachse rotierender Ausgangs-Hohlzylinder zonenweise in einer mit einer relativen Vorschubgeschwindigkeit gegenüber dem Hohlzylinder bewegten Heizzone erweicht und dabei unter Einwirkung einer nach radial nach außen gerichteten Kraft entweder gegen ein Formwerkzeug gedehnt, das in vorgegebenem radialem Abstand zur Rohrlängsachse angeordnet ist, oder er wird werkzeugfrei umgeformt. Die radial nach außen gerichtete Kraft basiert auf der Zentrifugalkraft und/oder auf einem Innen-Überdruck in der Hohlzylinder-Innenbohrung (auch als "Blasdruck" bezeichnet).

Zur Einhaltung der Maßhaltigkeit des abgezogenen Rohrstrangs dient eine Regelung von mindestens einer seiner Abmessungen, wie Außendurchmesser, Innendurchmesser oder Wanddicke. Als Stellgröße der Regelung sind der Blasdruck, die relative Vorschubgeschwindigkeit zwischen Hohlzylinders und Heizzone und die Temperatur in der Heizzone gebräuchlich.

### Stand der Technik

Je größer der Rohr-Enddurchmesser ist, umso schwieriger und kostenaufwändiger wird die Herstellung eines maßhaltigen Großrohres. Zur Entschärfung dieser Problematik wird in der JP 2004-149325 A vorgeschlagen, den Umformprozess in mehrere Umformstufen mit sukzessiver Durchmesservergrößerung zu unterteilen. Dazu wird der umzuformende Quarzglas-Hohlzylinder mit einem Durchmesser von 250 mm in eine Drehbank eingespannt und um seine horizontal orientierte Längsachse rotiert, während er mittels einer ringförmigen Anordnung von Heizbrennern erhitzt und dabei zonenweise erweicht wird, indem die Heizbrenner mit einer vorgegebenen Vorschubgeschwindigkeit entlang des Zylindermantels bewegt werden. Die Durchmesser-Vergrößerung ergibt sich infolge der auf den erweichten Bereich einwirkenden Zentrifugalkraft. Die Verformungszone wandert einmal entlang des ganzen Ausgangszylinders, bis dieser vollständig gedehnt ist. Der Rohr-Außendurchmesser wird dabei kontinuierlich mittels eines Laserstrahls werkzeugfrei erfasst. Dieser Umformschritt wird wiederholt, bis der nominale Rohrdurchmesser von 440 mm erreicht ist. Bei jedem Umformschritt wird der Rohr-Durchmesser um 15 mm vergrößert.

Bei diesem Umformprozess ergibt sich bei jeder einzelnen Umformstufe ein vergleichsweise geringer Umformgrad, was mit einer geringeren Abweichung vom Sollwert einer radialen Rohr-Abmessung einhergeht. Außerdem bietet jede Umformstufe die Möglichkeit, im jeweiligen Ausgangszylinder vorhandene Maßabweichungen zu berücksichtigen und zu korrigieren.

Andererseits liegt es auf der Hand, dass diese Verfahrensweise einen hohen Zeit- und Energieaufwand erfordert, zumal das Rohr zwischen aufeinanderfolgenden Umformschritten abkühlt.

Die EP 0 037 648 A1 beschreibt ein Verfahren zu Herstellung optischer Fasern, umfassend einen Verfahrensschritt, bei dem ein Zylinder durch zonenweises Erhitzen und Anlegen eines Innen-Überdrucks zu einem Rohr mit größerem Innendurchmesser umgeformt wird.

Die US 5,167,420 A beschreibt eine Vorrichtung zur Herstellung einer umlaufenden Nut in einem Glasrohr, wobei die Viskosität des Glases im Bereich der Nut durch aktive Kühlung verringert wird.

### Technische Aufgabe

Es kann versucht werden, die Anzahl der Umformschritte möglichst gering zu halten, indem der jeweilige Verformungsgrad - also die Durchmesseränderung - so groß wie möglich eingestellt wird. Es zeigt sich jedoch, dass sich im ursprünglichen Hohlzylinder bereits vorhandene Maßabweichungen beim Umformprozess leicht in das abgezogene Glasrohr fortsetzen und dabei sogar verstärkt werden. Besonders nachteilig bemerkbar machen sich dabei Schwankungen im radialen Querschnittsprofil oder Wandeinseitigkeiten, also radial ungleichmäßige Verläufe der Rohrwanddicke, was in Fachkreisen auch als "Siding" bezeichnet wird. Da bei Einsatz eines Formwerkzeugs der Außendurchmesser relativ fest vorgegeben ist, gehen in dem Fall Rohr-Wandeinseitigkeiten mit Schwankungen im Rohr-Innendurchmesser einher.

Mit zunehmendem Rohr-Enddurchmesser nimmt diese Problematik zu. Denn beim Umformprozess entwickeln sich im Ausgangszylinder vorhandene Wanddickenschwankungen exponentiell mit dem Durchmesser. Daher können letztlich die laut Spezifikation noch tolerierbaren Maximalwerte für das Siding (beispielsweise 1 mm) den in der Praxis realisierbaren Rohr-Enddurchmesser begrenzen. Vergleichsweise dünne Wandungsbereiche des Hohlzylinders verformen sich dabei leichter als dickwandigere Bereiche. Je höher der Blasdruck ist, umso stärker macht sich der Dickenunterschied bemerkbar, so dass der Blasdruck nicht beliebig hoch sein kann. Um kommerziell akzeptable Umformraten zu erreichen, muss stattdessen das Glas höher erhitzt und stärker erweicht werden. Dies führt aber zu verstärkten Ziehstreifen oder anderen Defekten in der Glaswandung sowie zu einem erhöhten Energiebedarf, insbesondere bei großvolumigen Rohren (im Folgenden auch als "Großrohre" bezeichnet), die wegen ihres großen Umfangs besonders rasch abkühlen.

Es ist somit Aufgabe der Erfindung, ein Verfahren anzugeben, das es erlaubt, einen Hohlzylinder in einem einzigen oder in möglichst wenigen Umformschritten zu einem Glasrohr mit großem Außendurchmesser und hoher Maßhaltigkeit umzuformen.

Außerdem liegt der Erfindung die Aufgabe zugrunde, eine zur Durchführung des Verfahrens geeignete Vorrichtung bereitzustellen.

### Allgemeine Beschreibung der Erfindung

Hinsichtlich des Verfahrens wird diese Aufgabe ausgehend von einem Verfahren der eingangs genannten Gattung erfindungsgemäß dadurch gelöst,
(i) dass das Bereitstellen des Hohlzylinders gemäß Verfahrensschritt (a) das Ermitteln einer Umfangsposition umfasst, an der die Wanddicke vergleichsweise gering ist,
(ii) und dass und dass beim Erhitzen und Erweichen des rotierenden Hohlzylinders ein Kühlmittel aus einer Kühlmittel-Quelle auf die Verformungszone nur dann oder überwiegend dann abgegeben wird, wenn die Umfangsposition mit vergleichsweise geringer Wanddicke infolge der Rotation des Hohlzylinders die Kühlmittel-Quelle passiert.

Beim erfindungsgemäßen Verfahren wird mindestens eine Umfangsposition mit vergleichsweise geringer Wanddicke entlang der Hohlzylinder-Längsachse bestimmt. Die geringe Wanddicke ist beispielsweise die minimale Wanddicke in einem radialen Querschnitt um den Umfang des Hohlzylinders. Die Umfangsposition der geringen Wanddicke wird im Folgenden auch kurz als "dünne Wandungsstelle" bezeichnet.

Zur Ermittlung der dünnen Wandungsstelle im Sinne des obigen Verfahrensschritts (i) wird das Wanddickenprofil um den Umfang unmittelbar oder mittelbar bestimmt; bei mittelbarer Bestimmung genügt beispielsweise allein die Messung des Innendurchmessers, wenn der Hohlzylinder-Außendurchmesser als konstant angenommen werden kann. Diese Bestimmung kann in einem separaten Vermessungsprozess vorab zum Umformprozess erfolgen, oder die Bestimmung geschieht sukzessive während des Umformprozesses, jedoch bevorzugt, bevor der betreffende Hohlzylinder-Längenabschnitt in die Heiz- und Verformungszone gelangt. Die Umfangsposition der dünnen Wandungsstelle kann sich über die Länge des umzuformenden Hohlzylinders gesehen verlagern; in der Regel und im einfachsten Fall ist sie jedoch über die gesamte Hohlzylinder-Länge gleich. Unter dieser Voraussetzung ist die Vermessung eines Hohlzylinder-Ringes ausreichend, um die betreffende Umfangsposition im Sinne des obigen Verfahrensschritts (i) über die gesamte Hohlzylinder-Länge ermitteln zu können.

Verfahrensschritt (ii) sieht vor, dass auf die dünne Wandungsstelle ein Kühlmittel einwirkt, wenn sie in den Bereich der Heizzone und damit in die Verformungszone gelangt ist. Die Einwirkung des Kühlmittels erfolgt periodisch, das heißt, sie geschieht nur dann, wenn die dünne Wandungsstelle infolge der Rotation des Hohlzylinders eine in Umfangsrichtung ortsfeste Quelle für die Abgabe von Kühlmittel passiert. Die Einwirkung kann nach jeder Passage der dünnen Wandungsstelle oder nach einer vorgegebenen Anzahl von Passagenerfolgen. Bei geregelter Einwirkung erfolgt die Abgabe an Kühlmittel bei einer Passage der dünnen Wandungsstelle in Abhängigkeit von einem einzuhaltenden und vorgegebenen Abkühlungsgrad. In jedem Fall wird die Abgabe an Kühlmittel zeitlich mehr oder weniger regelmäßig in Abhängigkeit von der Taktfrequenz der Hohlzylinder-Rotation verändert, was im Folgenden auch als "periodische Kühlmittel-Abgabe" bezeichnet wird.

Der Einwirkungsbereich, auf den die Abgabe von Kühlmittel beschränkt ist, kann als Kreisbogen oder Umfangsabschnitt um die Verformungszone aufgefasst werden. Die Abgabe von Kühlmittel erfolgt nur dann oder überwiegend dann, wenn sich der Umfangsabschnitt oder Kreisbogen im Bereich der Kühlmittelabgabe befindet. Verlässt die dünne Wandungsstelle diesen Bereich, wird die Abgabe von Kühlmittel beendet oder sie wird reduziert. Eine maximal intensive Kühlung einer dünnen Wandungsstelle im Vergleich zur übrigen Wandung ergibt sich, wenn bei jeder Umdrehung des Hohlzylinders um seine Längsachse die Kühlmittel-Abgabe genau einmal eingeschaltet und danach wieder vollständig ausgeschaltet wird.

Durch die Einwirkung des Kühlmittels wird die Viskosität des Glases um die dünne Wandungsstelle lokal erhöht, und dadurch die Verformbarkeit der Glasmasse in diesem Abschnitt der Verformungszone vermindert. Die dünne Wandungsstelle wird somit weniger stark verformt; sie bleibt also dicker als dies ohne die lokal auf sie einwirkende Kühlung der Fall wäre. Dabei ist zu beachten, dass auch eine punktuelle Kühlmittelabgabe auf die dünne Wandungsstelle nicht nur eine Viskositätserhöhung an genau der Umfangsposition der dünnsten Wanddicke bewirkt, sondern auch in benachbarten Bereichen, wenn auch schwächer. Die Viskosität des Glases zeigt eine exponentielle Temperatur-Abhängigkeit, so dass sich bereits Temperaturänderungen von wenigen Grad auf die Viskosität merklich auswirken.

Durch die periodische Kühlmittelabgabe wird somit die Viskosität der um die Hohlzylinder-Längsachse rotierenden Glasmasse über den Umfang der Verformungszone so beeinflusst, dass sich unabhängig vom Wanddickenprofil des Hohlzylinders eine gleichmäßigere Vorformung in der Verformungszone einstellt. Auch bei periodischer Kühlmittelabgabe kann die Abgabemenge an Kühlmittel in jeder Periode und damit die Intensität der Kühlung in Abhängigkeit einer radialen Rohr- oder Hohlzylinder-Abmessung gezielt eingestellt und insbesondere als Stellgröße einer Regelung für die betreffende Rohr- oder Hohlzylinder-Abmessung verwendet werden. Diese Abmessung ist insbesondere die Wanddicke oder der Innendurchmesser.

Unter der "Verformungszone" wird derjenige Bereich verstanden, in dem die Glasmasse plastisch verformbar ist und in dem durch Kühlung die Geometrie des abgezogenen Rohres beeinflussbar ist. In der Verformungszone nimmt der Außendurchmesser vom Hohlzylinder zum Rohr hin kontinuierlich zu, und die Wanddicke nimmt in der Regel ab; sie kann aber auch in etwa gleich bleiben.

Als "Anfang" der Verformungszone wird diejenige x-Position (entlang der Hohlzylinder-Längsachse) definiert, an der für den ortsabhängigen Außendurchmesser D_{V} der Verformungszone gilt: Dᵥ₁=D1+1/10 x (D2-D1). Dementsprechend markiert das "Ende" der Verformungszone diejenige x-Position, an der für den ortsabhängigen Außendurchmesser D_{V} der Verformungszone gilt: Dᵥ₂=D2-1/10 x (D2-D1).

Das erfindungsgemäße Verfahren reduziert die ungünstige Wirkung vorhandener Wandeinseitigkeiten des Hohlzylinders und ermöglicht so vergleichsweise große Durchmesseränderungen in einer oder jeder Umformstufe. Dadurch wird ein wirtschaftliches Umformverfahren mit wenigen Umformschritten ermöglicht; im Idealfall ist nur ein einziger Umformschritt erforderlich. Insbesondere gelingt es auf diese Weise Großrohre aus Quarzglas mit Außendurchmessern von mehr als 500 mm bei akzeptablem Energieaufwand und ohne verstärkte Ziehstreifen und tolerierbarem Siding zu erzeugen.

Es hat sich als besonders vorteilhaft erweisen, wenn als Kühlmittel eine Flüssigkeit, insbesondere Wasser, eingesetzt wird.

Beim Verdampfen der Flüssigkeit wird der Verformungszone Wärmeenergie entzogen. Bevorzugt wird Wasser eingesetzt, das sich durch eine besonders hohe Verdampfungsenthalpie auszeichnet und das rückstandsfrei von der Oberfläche der Verformungszone verdampft. Im Hinblick darauf hat sich der Einsatz von entionisiertem Wasser als besonders vorteilhaft erwiesen.

Dabei hat es sich bewährt, wenn die Flüssigkeit auf die Verformungszone aufgesprüht oder aufgespritzt wird.

Das Aufsprühen der Flüssigkeit in Form feiner Tröpfchen und das Aufspritzen in Form eines Flüssigkeitsstrahls ermöglichen ein direktes, lokal begrenztes Auftragen der Flüssigkeit, insbesondere von Wasser. Eine geringe Flüssigkeitsmenge genügt; diese kann rasch zugeführt werden, sobald die dünne Wandungsstelle in den vorgesehenen Bereich der Kühlmittelabgabe eintritt, und sie kann rasch ausgeschaltet oder reduziert werden, sobald die dünne Wandungsstelle den vorgesehenen Bereich der Kühlmittelabgabe wieder verlässt.

Vorzugsweise wird die Menge an Flüssigkeit im Takt der Hohlzylinder-Rotation verändert.

Die von der Kühlmittel-Quelle abgegeben Menge an Kühlflüssigkeit variiert im Takt der Hohlzylinder-Rotation; das bedeutet, sie ändert sich bei jeder Umdrehung des Hohlzylinders mindestens zweimal. Nachdem die dünne Wandungsstelle in den Bereich der Kühlmittelabgabe eingetreten ist, wird die Kühlmittel-Abgabe eingeschaltet oder erhöht, und sie wird ausgeschaltet oder verringert, sobald die dünne Wandungsstelle den vorgesehenen Bereich der Kühlmittelabgabe wieder verlässt.

Zur Kompensation mehrerer um den Umfang verteilter dünner Wandungsstellen kann die Kühlmittel-Quelle während einer Hohlzylinder-Umdrehung mehrmals aktiviert werden. Eine besonders effektive Kühlung einer dünnen Wandungsstelle im Vergleich zum übrigen Wandungsumfang wird jedoch dann erreicht, wenn die Abgabe des Kühlmittels während jeder Umdrehung des Hohlzylinders um seine Längsachse genau einmal eingeschaltet und genau einmal vollständig abgeschaltet wird.

Je kürzer der Kreisbogen um die Verformungszone ist, in dem das Kühlmittel auf sie einwirkt, umso effektiver kann die Viskosität genau im Bereich der dünnen Wandungsstelle erhöht werden. Im Hinblick darauf ist bei einer bevorzugten Verfahrensvariante vorgesehen, dass ein Kreisbogen um die Verformungszone, in dem das Kühlmittel einwirkt kleiner als 30 Winkelgrad ist.

Bei hohen Anforderungen an Maßgenauigkeit und Prozessstabilität wird eine Verfahrensweise bevorzugt, bei der der Innendruck auf weniger als 20 mbar, vorzugsweise auf weniger als 10 mbar eingestellt wird.

Es hat sich gezeigt, dass ein hoher Innendruck (Blasdruck) die Prozessstabilität beeinträchtigen kann. Die in der Rohrwandung wirkende Tangentialspannung infolge des Blasdrucks ist abhängig von der Wanddicke. Je dünner die Wandung ist, umso stärker macht sich der Innendruck auf die Verformung in der Verformungszone in tangentialer Richtung bemerkbar. Dies führt dazu, dass im Hohlzylinder vorhandene Wanddickenabweichungen beim Verformungsprozess unter Einfluss von Blasdruck verstärkt werden, da dabei eine dünnere Wandung einer höheren Tangentialspannung unterliegt als eine dickere Wandung.

Mittels der bisher bekannten Umformverfahren waren beim Umformen von Quarzglas-Hohlzylindern Durchmesseränderungen (D₂-D₁) von mehr als 40 mm ohne Inkaufnahme von Umformfehlern kaum möglich. Derartige Durchmesseränderungen sind mittels des erfindungsgemäßen Verfahrens problemlos zu bewältigen, sogar bei Durchmesseränderungen von 120 mm in einer einzigen Umformstufe zeigten sich keinerlei Inhomogenitäten im abgezogenen Rohrstrang oder Instabilitäten im Prozessverlauf.

Demnach sind beim erfindungsgemäßen Verfahren große Durchmesseränderungen bevorzugt, so dass das Rohr mit einem Außendurchmesser D₂ erzeugt wird, der um mindestens 40 mm, vorzugsweise um mindestens 70 mm und besonders bevorzugt um mindestens 100 mm größer ist als D_{1.}

Dadurch ist es möglich, in einer einzigen Umformstufe eine Durchmesseränderung von 40 mm oder mehr einzustellen, vorzugsweise mehr als 70 mm und besonders bevorzugt mehr als 100 mm, so dass auch bei großen Durchmesseränderungen ein besonders wirtschaftliches Umformverfahren mit wenigen Umformschritten möglich ist; im Idealfall ist nur ein einziger Umformschritt erforderlich. Insbesondere gelingt es auf diese Weise Großrohre aus Quarzglas mit Außendurchmessern von mehr als 500 mm bei akzeptablem Energieaufwand und ohne verstärkte Ziehstreifen und tolerierbarem Siding zu erzeugen.

Bei einer besonders bevorzugten Verfahrensvariante ist vorgesehen, dass der Temperaturverlauf um den Umfang der Verformungszone ermittelt wird.

Das periodisch auf die dünne Wandungsstelle einwirkende Kühlmittel kühlt die Oberfläche im Bereich der Verformungszone lokal ab. Durch Messung der Oberflächen-Temperatur um den Umfang der Verformungszone werden Informationen über das Maß der Abkühlung in Bezug auf die Höhe und die örtliche Verteilung der Temperatur erhalten. Die Kühlmaßnahme kann auf Basis dieser Temperaturmessung angepasst oder geregelt werden, indem beispielsweise bei Unterschreitung einer Grenztemperatur die Kühlung gestoppt oder verringert wird. Dabei können in die Anpassung/Regelung ergänzend auch durch Simulation oder empirische ermittelte Vergleichsdaten einfließen. Im Bereich der gekühlten Stelle stellt sich die maximale Abkühlung und Temperaturdifferenz ein. Ausgehend davon ergibt sich im Verlauf jeder Umdrehung eine gewisse Abflachung der Temperaturverteilung. Zur Erfassung des umfänglichen Temperaturverlaufs sind eine oder mehrere Temperatur-Messstellen um den Umfang der Verformungszone im Bereich der Längsachsenposition der Kühlmittel-Einwirkung verteilt. Wegen der Rotation der Verformungszone genügt im einfachsten Fall eine einzige Messstelle. Geeignete Umfangspositionen für eine Temperatur-Messstelle sind beispielsweise gegenüberliegend der Position der Kühlmitteleinwirkung (nach eine Umdrehung der gekühlten Stelle um etwa 180 Grad) oder unmittelbar vor dieser Position (nach einer Umdrehung zwischen 300 Grad bis 360 Grad). Geeignete Messeinrichtungen sind beispielsweise Infrarot-Kameras oder Pyrometer.

Hinsichtlich der Vorrichtung wird die oben angegebene Aufgabe ausgehend von einer Vorrichtung der eingangs genannten Gattung erfindungsgemäß dadurch gelöst, dass um eine Verformungszone eine Kühlmittel-Quelle angeordnet ist, die zur periodischen Abgabe eines Kühlmittels auf die Verformungszone ausgelegt ist, sobald infolge der Rotation des Hohlzylinders eine Umfangsposition mit vergleichsweise geringer Hohlzylinder-Wanddicke die Kühlmittel-Quelle passiert.

Die erfindungsgemäße Vorrichtung ist dazu bestimmt, mindestens eine Umfangsposition mit vergleichsweise geringer Wanddicke entlang der Hohlzylinder-Längsachse, die auch kurz als "dünne Wandungsstelle" bezeichnet wird, in einem geringeren Maße zum Rohr ausdehnen (aufzublasen) zu können als benachbarte Wandungsbereiche. Zu diesem Zweck ist vorgesehen, dass auf eine oder mehrere vorab bestimmte dünne Wandungsstellen ein Kühlmittel einwirkt, wenn diese Stelle in die Verformungszone gelangt ist und ihre weitere Verformung durch Einwirkung eines Kühlmittels beeinflussbar ist.

Zu diesem Zweck ist bei der erfindungsgemäßen Vorrichtung eine in Umfangsrichtung vorzugsweise ortsfeste Quelle für die Abgabe von Kühlmittel vorgesehen, die von der dünne Wandungsstelle infolge der Rotation des Hohlzylinders periodisch passiert wird. Die Kühlmittel-Quelle ist mit einer Regeleinrichtung verbunden und vorzugsweise so ausgelegt, dass sie bei jeder Passage der dünnen Wandungsstelle während einer Einwirkungsdauer Kühlmittel genau einmal auf die Verformungszone abgibt. Die während der Einwirkungsdauer aufgebrachte Kühlmittelmenge hängt vom Grad der zu korrigierenden Wanddickenabweichung ab und wird am einfachsten empirisch ermittelt und iterativ angepasst. Die Einwirkungsdauer liegt typischerweise im Bereich weniger Sekunden. Von der Regeleinrichtung kann vorgegeben sein, dass bei bestimmten Passagen der dünnen Wandungsstelle kein Kühlmittel oder eine geringere Menge an Kühlmittel auf die Verformungszone abgeben wird.

Bei einer bevorzugten Ausführungsform der erfindungsgemäßen Vorrichtung ist die Kühlmittel-Quelle zur Abgabe eines flüssigen Kühlmittels ausgelegt.

Sie umfasst eine beispielsweise eine Düse, ein Rohr oder einen Zerstäuber und ist dazu geeignet, die Kühl-Flüssigkeit in Form eines Strahles, oder als feine Tröpfchen mit einem Durchmesser von weniger als 1 mm auf den vorgesehenen Einwirkungsbereich der Verformungszone zu transportieren. Bei Einsatz von beispielsweise Wasser als Kühl-Flüssigkeit ist wegen des vergleichsweise niedrigen Siedepunktes und der hohen Temperaturen im Verformungsbereich davon auszugehen, dass auf die Oberfläche selbst kaum oder wenig Flüssigkeit, sondern allenfalls Dampf gelangt, wobei jedoch der Umgebung um den (theoretischen) Auftreffpunkt Wärme infolge der Verdampfung entzogen und damit der Auftreffpunkt abgekühlt wird.

Die Kühlmittel-Quelle ist bevorzugt zusammen mit der Heizeinrichtung oder einem Formwerkzeug in Richtung der Hohlzylinder-Längsachse bewegbar, jedoch ortsfest in Umfangsrichtung. Die Einwirkung des Kühlmittels ist auf einen Umfangsabschnitt oder auf einen Kreisbogen um die Verformungszone beschränkt. Je kürzer dieser Kreisbogen ist, umso zielgenauer wirkt das von der Kühlmittel-Quelle abgegebene Kühlmittel nur auf die dünne Wandungsstelle. Im Hinblick darauf ist der Kreisbogen um die Verformungszone, in dem das Kühlmittel einwirkt bevorzugt kleiner als 30 Winkelgrade.

Es hat sich auch bewährt, wenn die Kühlmittel-Quelle mit einer Regeleinrichtung für den Innendurchmesser, den Außendurchmesser oder die Wandstärke der Wandung des Rohres verbunden und dazu ausgelegt ist, in Abhängigkeit von einem Stellsignal der Regeleinrichtung eine vorgegebene Kühlmittel-Menge abzugeben.

Diese Ausführungsform ist insbesondere auch zur Kompensation mehrerer um den Umfang verteilter dünner Wandungsstellen geeignet, indem die Kühlmittel-Quelle mittels der Regeleinrichtung während einer Hohlzylinder-Umdrehung mehrmals zur die Abgabe von Kühlmittel aktiviert werden kann.

Um den Temperaturverlauf um den Umfang der Verformungszone ermitteln zu können, sind bei einer besonders bevorzugten Ausführungsform der Vorrichtung eine oder mehrere Temperaturmesseinrichtungen um den Umfang der Verformungszone im Bereich der Längsachsenposition der Kühlmittel-Einwirkung verteilt. Geeignete Messeinrichtungen sind beispielsweise Infrarot-Kameras oder Pyrometer.

### Ausführungsbeispiel

Nachfolgend wird die Erfindung anhand eines Ausführungsbeispiels und einer Patentzeichnung näher erläutert. In der Zeichnung zeigt im Einzelnen:
- **Figur 1**: eine Ausführungsform einer Vorrichtung zur Umformen eines Hohlzylinders aus Quarzglas in eine Quarzglasrohr in einer Seitenansicht und in schematischer Darstellung,
- **Figur 2**: einen Ausschnitt der Vorrichtung von Figur 1 mit zusätzlichen konstruktiven Details in schematischer Darstellung,
- **Figur 3**: eine vergrößerte Ansicht des Wanddickenverlaufs des Hohlzylinders im Bereich der Verformungszone zum Zeitpunkt des Einschaltens einer Kühlmittel-Zufuhr in schematischer Darstellung,
- **Figur 4**: dem Wanddickenverlauf im Bereich der Verformungszone zum Zeitpunkt des Abschaltens der Kühlmittel-Zufuhr, und
- **Figur 5**: ein Diagramm zur Erläuterung des Einflusses der Kühlmittel-Zufuhr auf den Wanddickenverlauf während eines Umformprozesses.

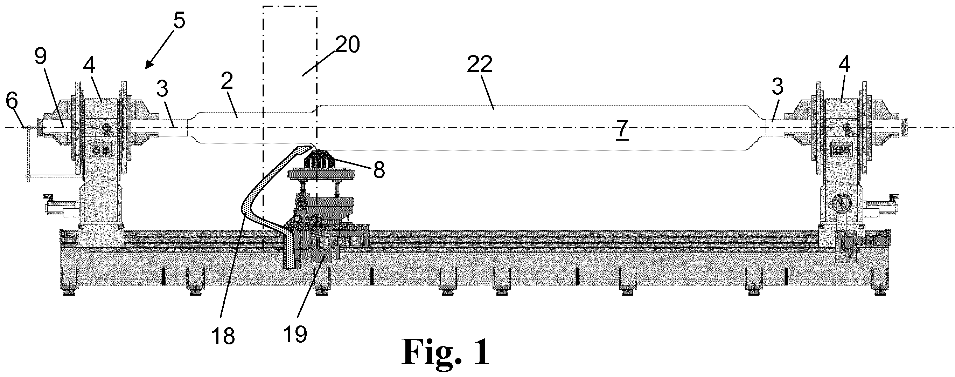

**Figur 1** zeigt schematisch eine Vorrichtung zum Umformen eines Quarzglas-Hohlzylinders 2 zu einem Großrohr 22. Der Umformungsprozess umfasst mehrere Umformstufen, in denen der jeweilige Ausgangs-Hohlzylinder ausgehend von einem Außendurchmesser von 300 mm sukzessive zu dem gewünschten Großrohr 22 mit einem Außendurchmesser von 960 mm und einer Wanddicke von 7,5 mm umgeformt wird.

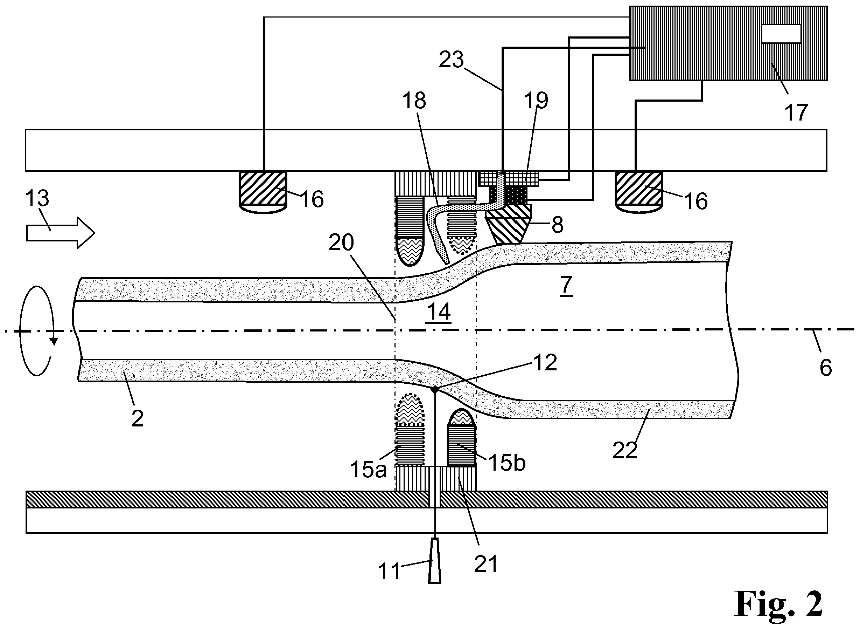

An die Stirnseiten des umzuformenden Hohlzylinders 2 aus Quarzglas werden Halterohre 3 angeschweißt. Die Halterohre 3 sind in Spannfutter 4 einer horizontalen Glasdrehbank 5 eingespannt, die synchron um die Rotationsachse 6 rotieren. Ein Brennerwagen 21 (siehe Figur 2), auf dem mehrere Brenner ringförmig um den Außenumfang des Hohlzylinders 2 verteilt sind, wird von einem Hohlzylinder-Ende zum anderen bewegt und erhitzt dabei den Quarzglas-Hohlzylinder 2 zonenweise und über seinen gesamten Umfang. Der Brennerwagen 21 ist in Figur 1 durch eine strichpunktierte Umfangslinie 20 - die der Heizzone entspricht - symbolisiert; in Figur 2 ist er im Detail schematisch dargestellt. Durch einen Gaseinlass 9 kann dabei die Innenbohrung 7 von Hohlzylinder 2 und Großrohr 22 mit Gas gespült werden, und es kann ein definierter Innendruck eingestellt werden. Getrieben durch die Zentrifugalkraft und den Innendruck legt sich die Rohr-Außenwand gegen ein Formteil aus Grafit 8 an, das zusammen mit dem Brennerwagen 21 verfahren wird.

Das Grafit-Formteil 8 ist auf einem Schlitten 19 montiert, der entlang der Längsachse 6 verfahrbar ist. Außerdem ist auf dem Schlitten 19 ein Wasserstrahlrohr 18 montiert, das einen auf die Verformungszone 14 zwischen Hohlzylinder 2 und Rohr 22 gerichtet ist. Das Wasserstrahlrohr 18 erzeugt periodisch einen feinen Wasserstrahl mit einem Durchmesser von weniger als 5 mm.. Der Wasserstrahl kann in flüssiger Form oder in Dampfform auf der Verformungszone 14 auftreffen.

Aus der Detail-Darstellung von **Figur 2** sind der Schlitten 19 mit dem darauf montierten Wasserstrahlrohr 18 und die Verformungszone 14 zwischen Hohlzylinder 2 und Rohr 22 erkennbar. Das Wasserstrahlrohr 18 ist über eine Daten- und Steuerleitung 23 mit einer Regeleinrichtung 17 verbunden.

Der Brennerwagen 21 der den Ausgangs-Hohlzylinder 2 von links nach rechts abfährt, wie vom Richtungspfeil 13 angezeigt. Auf dem Brennerwagen 21 sind nacheinander zwei parallel um die Rotationsachse 6 umlaufende Brennerringe 15a, 15b montiert, die zur Erwärmung und Erweichung des Ausgangszylinders 2 dienen. Die beiden Brennerringe 15a, 15b sind in axialer Richtung (6) um 50 mm beabstandet und unabhängig voneinander in ihrer Heizleistung anstellbar. Jeder der Brennerringe 15a, 15b wird aus fünf Gasbrennern gebildet, die gleichmäßig um die Zylinder-Längsachse 6 verteilt, wobei in Umfangsrichtung gesehen die Einzelbrenner der Brennerreihen 15a, 15b versetzt zueinander angeordnet sind.

Durch Vorschub des Brennerwagens 21 mit einer Geschwindigkeit von 4 cm/min wird der Hohlzylinder 2 unter Rotation um seine Längsachse 6 (die der Rotationsachse entspricht) kontinuierlich unter Einwirkung der Brennerringe 15a, 15b auf hohe Temperatur um 2.100 °C erhitzt. Dabei wird im hinteren Brennerring 15b eine geringere Heizleistung als im vorderen Brennerring 15a eingestellt.

Dabei kann die Innenbohrung 7 mit einem Gas gespült werden und ein definierter und geregelter Innendruck bis etwa 100 mbar in der Innenbohrung 7 eingestellt werden. Im Ausführungsbeispiel wird ein Blasdruck von 15 mbar angelegt.

Das Quarzglas erhält durch das Aufheizen in den Brennerringen 15a, 15b eine so geringe Viskosität, so dass es sich allein unter Einwirkung von Zentrifugalkraft und Innendruck und ohne Einsatz eines Formwerkzeugs zu dem Rohr 22 verformt. Der Umformprozess ist somit werkzeugfrei. Unterstützend legt sich die Rohr-Außenwandung gegen ein Formteil 8 aus Grafit an.

Zur Wanddickenmessung sind im Bereich des Ausgangszylinders 2 und im Bereich des abgezogenen Quarzglasrohres 22 optische Sensoren 16 angeordnet, die mit der Regeleinrichtung 17 verbunden sind, die eine Wanddickenregelung beinhaltet. Die Sensoren 16 sind in der Lage, bei rotierendem Rohrstrang kontinuierlich ein Wanddickenprofil zu erzeugen, das in der Regeleinrichtung 17 in der Art ausgewertet wird, dass der Betrag der Wandeinseitigkeit (Maximalwert minus Minimalwert der Wanddicke) und die zirkumferentielle Lage der minimalen Wanddicke (dünne Wandungsstelle) und der maximalen Wanddicke über dem Außenumfang festgestellt wird.

Zur Messung der Oberflächentemperatur im Bereich der Verformungszone 21 ist ein Pyrometer 11 auf eine Messstelle 12 gerichtet. Die Position der Temperatur-Messstelle 12 befindet sich gegenüberliegend des gedachten Auftreffpunktes für den Wasserstrahl aus dem Wasserstrahlrohr 18 auf der Verformungszone 14 (mit einem Versatz von etwa 180 Grad in Rotationsrichtung). Auf diese Weise wird der Temperaturverlauf um den Umfang der Verformungszone 14 erfasst. Diese Information wird über eine Daten- und Steuerleitung (nicht dargestellt) der Regeleinrichtung 17 zugeführt und ergänzend zur Temperatur- oder Wandstärkenregelung eingesetzt.

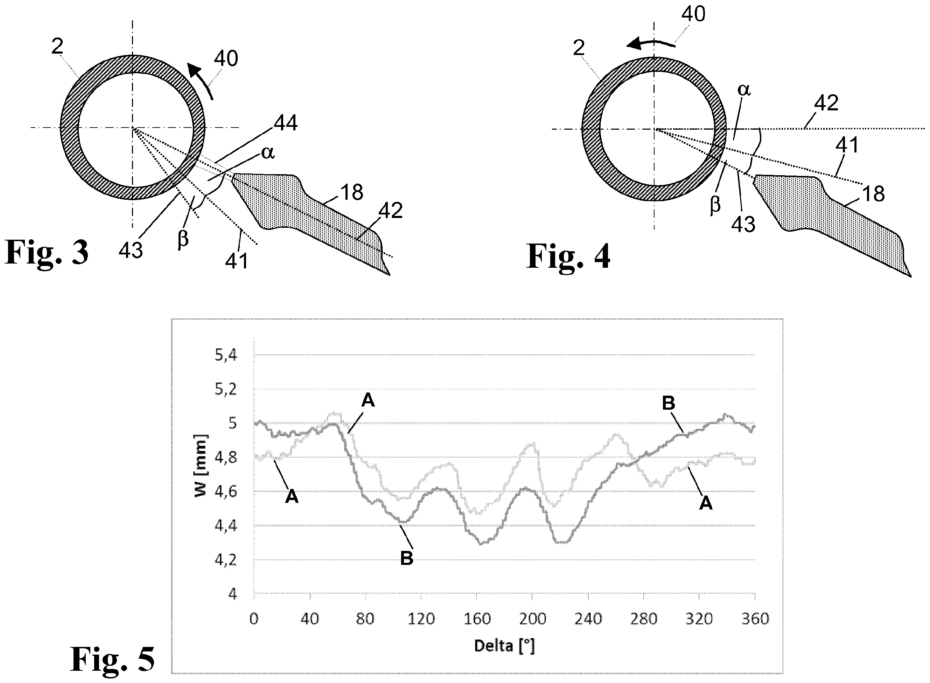

**Figur 3** zeigt schematisch den Wanddickenverlauf des Hohlzylinders 2 im Bereich der Verformungszone 14 in einem radialen Querschnitt. Die Rotationsrichtung um die Längsachse (6) ist mit der Bezugsziffer 40 und die die vorab ermittelte Umfangsposition der dünnsten Hohlzylinder-Wandung mit der Bezugsziffer 41 bezeichnet. Die Regeleinrichtung 17 steuert die Wasserzufuhr über den Wasserstrahlrohr 18 so, dass beim Durchgang der vorab ermittelten dünnen Wandungsstelle 41 ein Wasserstrahl 44 kurzzeitig aufgespritzt wird. Die Kühlwasserzufuhr setzt bereits ein, kurz bevor die dünne Wandungsstelle 41 die Umfangsposition des Wasserstrahlrohrs 18 erreicht und sie endet, kurz nachdem die dünne Wandungsstelle 41 die Umfangsposition des Wasserstrahlrohrs 18 passiert hat, wie in **Figur 4** gezeigt. Im Ausführungsbeispiel beträgt der Winkel α zwischen den Umfangsposition 42 mit einsetzendem Wasserstrahl 44 und dünnster Wandung 41 etwa 10 Grad, und der Winkel β zwischen den Umfangsposition 43, ab der der Wasserstrahl 44 wieder abgeschaltet wird und dünnster Wandung 41 beträgt etwa 5 Grad. In Abhängigkeit von der Hohlzylinder-Rotation ergibt sich somit eine "pulsierende Kühlwasser-Abgabe auf die Verformungszone 14 über einen Kreisbogen von etwa 15 Grad, der die dünnste Wandungsstelle 41 umgibt. Die Abgabe von Kühlwasser erfolgt nur dann wenn sich die dünnste Wandungsstelle 41 innerhalb dieses Kreisbogens befindet. Verlässt die dünnste Wandungsstelle 41 den Kreisbogen, wird die Abgabe von Kühlwasser beendet.

Dadurch wird die Viskosität des Quarzglases um die dünnste Wandungsstelle 41 lokal erhöht, und dadurch die Verformbarkeit der Glasmasse in diesem Abschnitt der Verformungszone vermindert. Die dünnste Wandungsstelle 41 bleibt dicker als dies ohne die lokal auf sie einwirkende Kühlung der Fall wäre. Da die Viskosität des Quarzglases eine exponentielle Temperatur-Abhängigkeit zeigt, wirken sich bereits Temperaturänderungen von wenigen Grad auf die Viskosität merklich aus.

Rotiert der Hohlzylinder 2 mit dem anfänglichen Außendurchmesser von 300 mm um die Längsachse 6 mit einer Rotationsgeschwindigkeit von 30 U/min, führt dies im Bereich der Verformungszone 14 (je nach lokalem Umfang) zu einer Tangentialgeschwindigkeit von mehr als 0,5 m/s. Ein Quarzglasstreifen mit einer Breite von 1 cm und mit einer Wanddicke von 1 cm hat demnach eine Massengeschwindigkeit von etwa 0,11 kg/s. Um diesen Streifen um 1 K abzukühlen, muss ein Energieumsatz von etwa 150 J/s abgeführt werden (bei einer spezifischen Wärmekapazität von Quarzglas von etwa 1,4 J/gK), was einer Wassermenge von 0,06 g/s entspricht (unter der Annahme dass die gesamte Wassermenge verdampft).

Durch die pulsierende, periodische Kühlwasserabgabe wird die Viskosität der um die Hohlzylinder-Längsachse 6 rotierenden Glasmasse über den Umfang der Verformungszone 14 so beeinflusst, dass sich unabhängig vom Wanddickenprofil des Hohlzylinders eine gleichmäßigere Vorformung in der Verformungszone einstellt.

Bei mehreren Umformstufen zur Herstellung des endgültigen Rohrdurchmessers genügt es, wenn die Wanddickenkorrektur durch periodische Kühlwasserabgabe in der letzten Umformstufe vorgenommen wird. Dies belegt auch das Diagramm von **Figur 5****,** das den Wanddickenverlauf benachbarter Längenabschnitte eines Quarzglasrohres nach der letzten Umformstufe (Außendurchmesser des Ausgangszylinders 2 = 320 mm, Außendurchmesser des endgültigen Rohres 22 = 440 mm, nominale Wanddicke 4,7 mm) zeigt. Im Diagramm ist die Wanddicke W (in mm) gegen den Umfangswinkel Delta (in Grad) aufgetragen. Der Ausgangszylinder 2 zeigt eine dünne Wandungsstelle, die sich in gleichbleibender Ausprägung und an der gleichen Umfangsposition (in Figur 5 bei etwa 160 Grad) über seine gesamte Länge erstreckt. Während der Umformung des einen Rohr-Längenabschnitts (Kurve A) wurde die dünne Wandungsstelle anhand einer periodischen Kühlwasserabgabe gemäß der Erfindung behandelt. Im Vergleich zum nichtbehandelten Längenabschnitt (Kurve B) konnte durch die Maßnahme allein in letzten Umformstufe das Maß der Wandeinseitigkeit (Siding), berechnet als maximale Wanddicke minus minimale Wanddicke, von 0,76 mm auf 0,59 mm verringert werden.

## Patentansprüche

1. Verfahren zur Herstellung eines Rohres (22) aus Glas, insbesondere aus Quarzglas, umfassend folgende Verfahrensschritte:
(a) Bereitstellen eines Hohlzylinders (2) aus dem Glas mit einer Wanddicke und mit einem Außendurchmesser D₁,
(b) zonenweises Erhitzen und Erweichen des um eine Rotationsachse (6) rotierenden Hohlzylinders (2) in einer mit einer relativ zur Rotationsachse (6) bewegten Heizzone (20),
(c) Bildung einer Verformungszone (14) durch radiales Dehnen des erweichten Bereichs unter Wirkung einer Zentrifugalkraft und/oder eines in der Hohlzylinderbohrung (7) anliegenden Innenüberdrucks, und
(d) kontinuierliches Formen des Rohres (22) mit einem Außendurchmesser D₂, der größer ist als D₁,
**dadurch gekennzeichnet,**
(i) **dass** das Bereitstellen des Hohlzylinders (2) gemäß Verfahrensschritt (a) das Ermitteln einer Umfangsposition umfasst, an der die Wanddicke vergleichsweise gering ist,
(ii) und **dass** beim Erhitzen und Erweichen des rotierenden Hohlzylinders (2) ein Kühlmittel (44) aus einer Kühlmittel-Quelle (18) auf die Verformungszone (14) nur dann oder überwiegend dann abgegeben wird, wenn die Umfangsposition mit vergleichsweise geringer Wanddicke infolge der Rotation des Hohlzylinders (2) die Kühlmittel-Quelle (18) passiert.

2. Verfahren nach Anspruch 1, **dadurch gekennzeichnet, dass** als Kühlmittel (44) eine Flüssigkeit eingesetzt wird.

3. Verfahren nach Anspruch 2, **dadurch gekennzeichnet, dass** die Flüssigkeit auf die Verformungszone (14) aufgesprüht oder aufgespritzt wird.

4. Verfahren nach Anspruch 2 oder 3, **dadurch gekennzeichnet, dass** als Flüssigkeit Wasser eingesetzt wird.

5. Verfahren nach einem der Ansprüche 2 bis 4, **dadurch gekennzeichnet, dass** die Menge an Flüssigkeit im Takt der Hohlzylinder-Rotation verändert wird.

6. Verfahren nach Anspruch 5, **dadurch gekennzeichnet, dass** Flüssigkeitsmenge während jeder Umdrehung des Hohlzylinders (2) um seine Längsachse (6) genau einmal erhöht und genau einmal verringert wird.

7. Verfahren nach einem der vorhergehenden Ansprüche, **dadurch gekennzeichnet, dass** ein Kreisbogen um die Verformungszone (14), in dem das Kühlmittel (44) einwirkt kleiner als 30 Winkelgrade ist.

8. Verfahren nach einem der vorhergehenden Ansprüche, **dadurch gekennzeichnet, dass** der Innenüberdruck auf weniger als 20 mbar, vorzugsweise auf weniger als 10 mbar eingestellt wird.

9. Verfahren nach einem der vorhergehenden Ansprüche, **dadurch gekennzeichnet, dass** das Rohr (22) mit einem Außendurchmesser D₂ erzeugt wird, der um mindestens 40 mm, vorzugsweise um mindestens 70 mm und besonders bevorzugt um mindestens 100 mm größer ist als D_{1.}

10. Verfahren nach einem der vorhergehenden Ansprüche, **dadurch gekennzeichnet, dass** der Temperaturverlauf um den Umfang der Verformungszone (14) ermittelt wird.

11. Vorrichtung zur Durchführung des Verfahrens nach einem der Ansprüche 1 bis 10, umfassend
∘ eine Rotationseinrichtung (5) zur Rotation eines Hohlzylinders (2) aus Glas um seine Längsachse (6), der einen Innendurchmesser, einen Außendurchmesser D1 und eine von einer Wandung begrenzte Innenbohrung (7) aufweist, und
∘ eine relativ zum Hohlzylinder (2) bewegbare Heizeinrichtung (20) zum zonenweisen Erhitzen und Erweichen des Hohlzylinders (2) und Formen eines Rohres (22) mit einem Außendurchmesser D₂, der größer ist als D₁,
**dadurch gekennzeichnet, dass** um eine Verformungszone (14) eine Kühlmittel-Quelle (18) angeordnet ist, die zur periodischen Abgabe eines Kühlmittels auf die Verformungszone (14) ausgelegt ist, sobald infolge der Rotation des Hohlzylinders (2) eine Umfangsposition mit vergleichsweise geringer Hohlzylinder-Wanddicke die Kühlmittel-Quelle (18) passiert.

12. Vorrichtung nach Anspruch 11, **dadurch gekennzeichnet, dass** die Kühlmittel-Quelle (18) zur Abgabe eines flüssigen Kühlmittels (44) ausgelegt ist.

13. Vorrichtung nach einem der Ansprüche 11 oder 12, **dadurch gekennzeichnet, dass** die Kühlmittel-Quelle (18) dazu ausgelegt ist, Kühlmittel (44) im Takt der Hohlzylinder-Rotation während einer Umdrehung des Hohlzylinders (2) um seine Längsachse (6) während einer Einwirkungsdauer genau einmal abzugeben.

14. Vorrichtung nach einem der Ansprüche 11 bis 13, **dadurch gekennzeichnet, dass** die Kühlmittel-Quelle (18) gemeinsam mit der Heizeinrichtung (20) oder einem Formwerkzeug (8) in Richtung der Hohlzylinder-Längsachse (6) verschiebbar ist.

15. Vorrichtung nach einem der Ansprüche 11 bis 14, **dadurch gekennzeichnet, dass** die Kühlmittel-Quelle (18) mit einer Regeleinrichtung (17) für den Innendurchmesser, den Außendurchmesser oder die Wandstärke der Wandung des Rohres (22) verbunden und dazu ausgelegt ist, in Abhängigkeit von einem Stellsignal der Regeleinrichtung (17) eine vorgegebene Kühlmittel-Menge abzugeben.

## Claims

1. A method for producing a tube (22) of glass, particularly of quartz glass, comprising the following method steps:
(a) providing a hollow cylinder (2) of the glass with a wall thickness and with an outer diameter D₁,
(b) zonewise heating and softening of the hollow cylinder (2) which is rotating about a rotation axis (6) in a heating zone (20) moved relative to the rotation axis (6),
(c) forming a deformation zone (14) by radial expansion of the softened area under the action of a centrifugal force and/or an internal overpressure applied in the hollow cylinder bore (7), and
(d) continuously forming the tube (22) with an outer diameter D₂ which is greater than D₁,
**characterized in that**
(i) providing the hollow cylinder (2) according to method step (a) comprises the determination of a circumferential position at which the wall thickness is relatively small,
(ii) and during heating and softening of the rotating hollow cylinder (2) a coolant (44) is dispensed from a coolant source (18) onto the deformation zone (14) only when or predominantly when due to the rotation of the hollow cylinder the circumferential position having the relatively small wall thickness passes the coolant source (18).

2. The method according to claim 1, **characterized in that** a liquid is used as the coolant (44).

3. The method according to claim 2, **characterized in that** the liquid is sprayed or splashed onto the deformation zone (14).

4. The method according to claim 2 or 3, **characterized in that** water is used as the liquid.

5. The method according to any one of claims 2 to 4, **characterized in that** the amount of liquid is changed in the cycle of the hollow-cylinder rotation.

6. The method according to claim 5, **characterized in that** the liquid amount during each rotation of the hollow cylinder (2) about its longitudinal axis (6) is increased exactly once and is decreased exactly once.

7. The method according to any one of the preceding claims, **characterized in that** a circular arc around the deformation zone (14) in which the coolant (44) is operative is smaller than 30 angular degrees.

8. The method according to any one of the preceding claims, **characterized in that** the internal overpressure is set to less than 20 mbar, preferably to less than 10 mbar.

9. The method according to any one of the preceding claims, **characterized in that** the tube (22) is produced with an outer diameter D₂ which is greater by at least 40 mm, preferably by at least 70 mm and particularly preferably by at least 100 mm than D₁.

10. The method according to any one of the preceding claims, **characterized in that** the temperature profile around the circumference of the deformation zone (14) is determined.

11. An apparatus for performing the method according to any one of claims 1 to 10, comprising
o a rotation device (5) for rotating a hollow cylinder (2) of glass about its longitudinal axis (6), which cylinder has an inner diameter, an outer diameter D1 and an inner bore (7) defined by a wall, and
∘ a heater (20) which is movable relative to the hollow cylinder (2) for the zonewise heating and softening of the hollow cylinder (2) and for forming a tube (22) with an outer diameter D₂ which is greater than D₁,
**characterized in that** a coolant source (18) is arranged around a deformation zone (14) to dispense a coolant periodically to the deformation zone (14) as soon as due to the hollow-cylinder rotation a circumferential position having a relatively small wall thickness passes the coolant source (18).

12. The apparatus according to claim 11, **characterized in that** the coolant source (18) is configured to dispense a liquid coolant (44).

13. The apparatus according to any one of claims 11 or 12, **characterized in that** the coolant source (18) is configured to dispense coolant (44) during an exposure period exactly once in the cycle of the hollow-cylinder rotation during a rotation of the hollow cylinder (2) about its longitudinal axis (6).

14. The apparatus according to any one of claims 11 to 13, **characterized in that** the coolant source (18) is displaceable together with the heater (20) or a molding tool (8) in the direction of the longitudinal axis (6) of the hollow cylinder.

15. The apparatus according to any one of claims 11 to 14, **characterized in that** the coolant source (18) is connected to a control device (17) for the inner diameter, the outer diameter or the wall thickness of the wall of the tube (22) and is configured to dispense a given coolant amount in response to a control signal of the control device (17).

## Revendications

1. Procédé de fabrication d'un tube (22) en verre, notamment en verre de quartz, comprenant les étapes de procédé suivantes:
(a) fourniture d'un cylindre creux (2) constitué du verre, ayant une épaisseur de paroi et un diamètre extérieur D₁,
(b) échauffement par zones et ramollissement du cylindre creux (2) en rotation autour d'un axe de rotation (6), dans une zone de chauffage (20) déplacée par rapport à l'axe de rotation (6),
(c) formation d'une zone de déformation (14) par rotation radiale de la partie ramollie avec effet d'une force centrifuge et/ou d'une pression intérieure excessive appliquée dans l'alésage du cylindre creux (7), et
(d) formage continu du tube (22) avec un diamètre extérieur D₂ qui est supérieur à D₁,
**caractérisé en ce**
(i) **que** la fourniture du cylindre creux (2) suivant l'étape de procédé (a) comprend la détection d'une position circonférentielle à laquelle l'épaisseur de paroi est comparativement moindre,
(ii) et en ce que lors de l'échauffement et du ramollissement du cylindre creux (2) en rotation, un moyen de refroidissement (44) provenant d'une source (18) de moyen de refroidissement est seulement déchargé ou principalement déchargé sur la zone de déformation (14) seulement lorsque la position circonférentielle ayant une épaisseur de paroi comparativement moindre passe devant la source (18) de moyen de refroidissement suite à la rotation du cylindre creux (2).

2. Procédé selon la revendication 1, **caractérisé en ce qu'**un liquide est utilisé comme moyen de refroidissement (44).

3. Procédé selon la revendication 2, **caractérisé en ce que** le liquide est pulvérisé ou aspergé sur la zone de déformation (14).

4. Procédé selon la revendication 2 ou 3, **caractérisé en ce que** de l'eau est utilisée comme liquide.

5. Procédé selon l'une quelconque des revendications 2 à 4, **caractérisé en ce que** la quantité de liquide est modifiée en cadence avec la rotation du cylindre creux.

6. Procédé selon la revendication 5, **caractérisé en ce que** la quantité de liquide pendant chaque rotation du cylindre creux (2) autour de son axe longitudinal (6) est augmentée exactement une fois et est diminuée exactement une fois.

7. Procédé selon l'une quelconque des revendications précédentes, **caractérisé en ce qu'**un arc de cercle autour de la zone de déformation (14), dans lequel le moyen de refroidissement (44) agit, est inférieur à 30 degrés d'angle.

8. Procédé selon l'une quelconque des revendications précédentes, **caractérisé en ce que** la pression intérieure excessive est réglée sur moins de 20 mbar, de préférence sur moins de 10 mbar.

9. Procédé selon l'une quelconque des revendications précédentes, **caractérisé en ce que** le tube (22) est produit avec un diamètre extérieur D₂ qui est supérieur à D₁ d'au moins 40 mm, de préférence d'au moins 70 mm, et de manière particulièrement préférée d'au moins 100 mm.

10. Procédé selon l'une quelconque des revendications précédentes, **caractérisé en ce que** l'on détermine la courbe de température autour de la circonférence de la zone de déformation (14).

11. Dispositif destiné à la réalisation du procédé selon l'une quelconque des revendications 1 à 10, comprenant
∘ un dispositif de rotation (5) pour la rotation d'un cylindre creux (2) en verre autour de son axe longitudinal (6), qui présente un diamètre intérieur, un diamètre extérieur D₁ et un alésage intérieur (7) délimité par une paroi, et
∘ un dispositif de chauffage (20) déplaçable par rapport au cylindre creux (2), destiné à échauffer par zones et ramollir le cylindre creux (2) et à former un tube (22) avec un diamètre extérieur D₂ supérieur à D₁, **caractérisé en ce qu'**autour d'une zone de déformation (14) est disposée une source (18) de moyen de refroidissement, laquelle est conçue pour la décharge périodique d'un moyen de refroidissement sur la zone de déformation (14) dès qu'une position circonférentielle ayant une épaisseur de paroi du cylindre creux comparativement moindre passe devant la source (18) de moyen de refroidissement suite à la rotation du cylindre creux (2).

12. Dispositif selon la revendication 11, **caractérisé en ce que** la source (18) de moyen de refroidissement est conçue pour décharger un moyen de refroidissement (44) liquide.

13. Dispositif selon l'une quelconque des revendications 11 ou 12, **caractérisé en ce que** la source (18) de moyen de refroidissement est conçue pour décharger exactement une fois pendant une durée d'action le moyen de refroidissement (44) en cadence avec la rotation du cylindre creux pendant une rotation du cylindre creux (2) autour de son axe longitudinal (6).

14. Dispositif selon l'une quelconque des revendications 11 à 13, **caractérisé en ce que** la source (18) de moyen de refroidissement est déplaçable en direction de l'axe longitudinal (6) du cylindre creux, en commun avec le dispositif de chauffage (20) ou un outil de formage (8).

15. Dispositif selon l'une quelconque des revendications 11 à 14, **caractérisé en ce que** la source (18) de moyen de refroidissement est reliée à un dispositif de réglage (17) pour le diamètre intérieur, le diamètre extérieur ou l'épaisseur de paroi de la paroi du tube (22), et est conçue pour décharger une quantité prédéterminée de moyen de refroidissement en fonction d'un signal de réglage du dispositif de réglage (17).
